# EUROPEAN PATENT APPLICATION

(11) **EP 4 806 698 A1**
(43) Date of publication of application: **16.09.2026**
(21) Application number: 26163494.3
(22) Date of filing: 10.03.2026
(51) Int. Cl.: B60K 35/215

(54) **DISPLAY DEVICE AND VEHICLE WITH DISPLAY DEVICE**

(30) Priority: 14.03.2025 JP 2025041555
(71) Applicant: Toyota Jidosha Kabushiki Kaisha, Toyota-shi, Aichi-ken 471-8571 (JP)
(72) Inventor: Ogawa, Takahiro, Toyota-shi, 471-8571 (JP); Kondo, Fumio, Toyota-shi, 471-8571 (JP); Isobe, Toshiya, Toyota-shi, 471-8571 (JP); Nakamura, Naoto, Toyota-shi, 471-8571 (JP); Ikura, Masami, Toyota-shi, 471-8571 (JP); Yanai, Yuta, Toyota-shi, 471-8571 (JP); Hosokawa, Shumpei, Toyota-shi, 471-8571 (JP); Nagata, Jiyunya, Toyota-shi, 471-8571 (JP)
(74) Representative: J A Kemp LLP

(57) **Abstract**

A display device 1 mounted in a vehicle includes: a display unit 30 disposed on each of a left side and a right side with respect to a center of a driver seat of the vehicle; an input unit 40 configured to detect an input operation by an occupant of the vehicle; and a control unit configured to control an image to be displayed on the display unit. The control unit causes the display unit to display images of a surrounding environment of the vehicle that are received from a plurality of imaging units 10 provided with the vehicle, and changes at least one of an image to be displayed on the display unit of the images received from the plurality of imaging units and an angle of view of the image to be displayed, based on an input operation originating from a user and detected by the input unit.

## Description

### FIELD

The present disclosure relates to a display device and a vehicle with the display device.

### BACKGROUND

Conventionally, it has been known that an image of an area to the left rear of a vehicle is displayed on a display provided on the left side of a driver seat and that an image of an area to the right rear of the vehicle is displayed on a display provided on the right side of the driver seat (JP 2018-160747 A).

In a display device described in JP 2018-160747 A, an image of the same angle of view captured by a camera that captures an image of an area to the left rear of the vehicle is always displayed on the display provided on the left side of the vehicle. Similarly, an image of the same angle of view captured by a camera that captures an image of an area to the right rear of the vehicle is always displayed on the display provided on the right side of the vehicle. Therefore, the angle of view of the image displayed on the display cannot be changed in accordance with the preference of a user.

In view of the above problem, an object of the present disclosure is to enable changing an image or an angle of view of the image to be displayed on a display disposed on the left or right side, in accordance with the preference of a user.

### SUMMARY

The present disclosure includes the following aspects.
(1) A display device mounted in a vehicle, the display device comprising:
   a display unit disposed on each of a left side and a right side with respect to a center of a driver seat of the vehicle;
   an input unit configured to detect an input operation by an occupant of the vehicle; and
   a control unit configured to control an image to be displayed on the display unit,
   wherein the control unit causes the display unit to display images of a surrounding environment of the vehicle that are received from a plurality of imaging units provided with the vehicle, and changes at least one of an image to be displayed on the display unit of the images received from the plurality of imaging units and an angle of view of the image to be displayed, based on an input operation originating from a user and detected by the input unit.
(2) The display device according to above (1), wherein the display unit is disposed at a position within arm's reach of a driver of the vehicle while driving, and
   the input unit includes a touch sensor disposed on a screen of the display unit.
(3) The display device according to above (2), wherein when a swiping operation on the screen of the display unit is detected by the touch sensor, the control unit changes the image to be displayed on the display unit to an image received from another imaging unit.
(4) The display device according to above (2) or (3), wherein when a slide operation, a pinch-in operation, or a pinch-out operation on the screen of the display unit is detected by the touch sensor, the control unit changes the angle of view of the image to be displayed on the display unit.
(5) The display device according to any one of above (1) to (4), wherein the input unit includes a blinker switch, and
   the input operation includes a direction indication operation in the blinker switch.
(6) The display device according to above (5), wherein the control unit causes the display unit disposed in a direction indicated by the blinker switch to display the image received from the imaging unit that captures an image in the direction indicated by the blinker switch.
(7) The display device according to any one of above (1) to (6), wherein the display unit is disposed on each of both sides of a meter panel of the vehicle.
(8) The display device according to any one of above (1) to (7), wherein the imaging unit includes cameras that capture images of the surrounding environment on a left side and a right side of the vehicle,
   the control unit causes the display unit disposed on the left side with respect to the center of the driver seat to display an image received from the imaging unit that captures an image of the surrounding environment on the left side of the vehicle, and causes the display unit disposed on the right side with respect to the center of the driver seat to display an image received from the imaging unit that captures an image of the surrounding environment on the right side of the vehicle.
(9) The display device according to above (8), wherein the imaging unit includes a plurality of cameras provided on the left side and the right side of the vehicle and configured to capture images of the surrounding environment in different orientations within a front-rear direction of the vehicle, and
   the control unit switches, based on the input operation, the image to be displayed on the display unit among images received from a plurality of cameras arranged on a side on which the display unit is provided.
(10) The display device according to any one of above (1) to (9), wherein the display units disposed on the left side and the right side with respect to the center of the driver seat of the vehicle display images separately based on the input operation without linking with each other.
(11) The display device according to any one of above (1) to (10), wherein the control unit causes the display unit to display, based on the input operation, an image generated according to an output of a ranging unit that is provided with the vehicle and configured to detect a distance to an object around the vehicle.
(12) A vehicle comprising the display device according to any one of above (1) to (11), the vehicle comprising
   a side mirror provided separately from the display unit.

### BRIEF DESCRIPTION OF DRAWINGS

FIG. 1 is a schematic block diagram illustrating a configuration of a display device.
FIG. 2 is a schematic plan view illustrating a configuration of a vehicle in which the display device is mounted.
FIG. 3 is a schematic cross-sectional view illustrating a part of the interior of the vehicle in which the display device is mounted.
FIG. 4 is a schematic configuration diagram of a meter panel of the vehicle and the surroundings thereof as viewed from the driver seat side.
FIG. 5 is a configuration diagram schematically illustrating a configuration of an ECU.
FIG. 6 is a diagram schematically illustrating a relationship between a touch operation detected by a touch sensor and an image displayed on a left display.
FIG. 7 is a flowchart illustrating a flow of function selection processing performed by a function selection section.
FIG. 8 is a flowchart illustrating a flow of image adjustment processing performed by an image adjustment section.
FIG. 9 is a flowchart illustrating a flow of blinker linking processing performed by a blinker linking section.

### DESCRIPTION OF EMBODIMENTS

Hereinafter, embodiments will be described in detail with reference to the drawings. In the following description, similar components are denoted by the same reference numerals.

### Configuration of Display Device

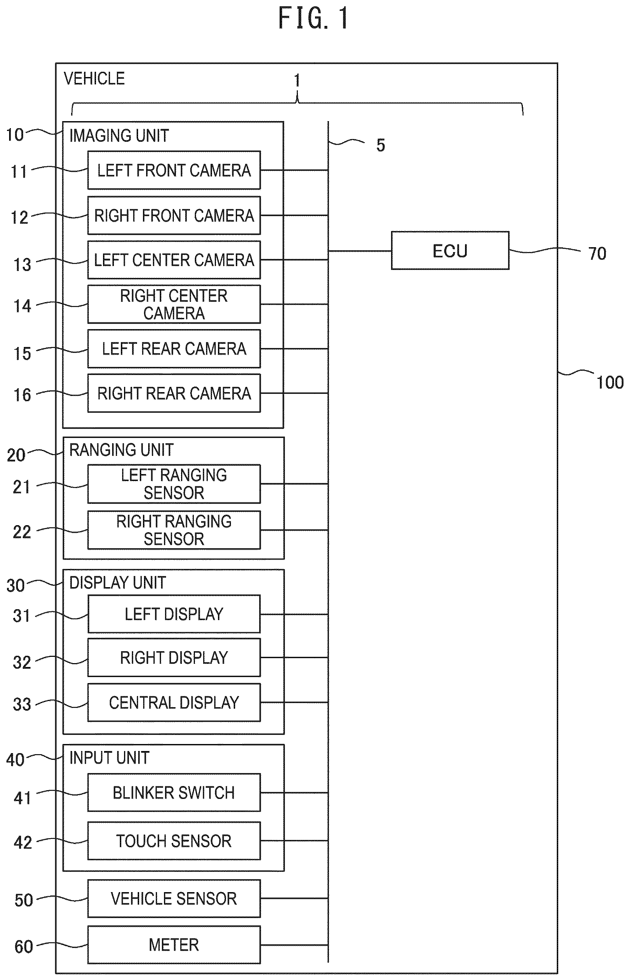

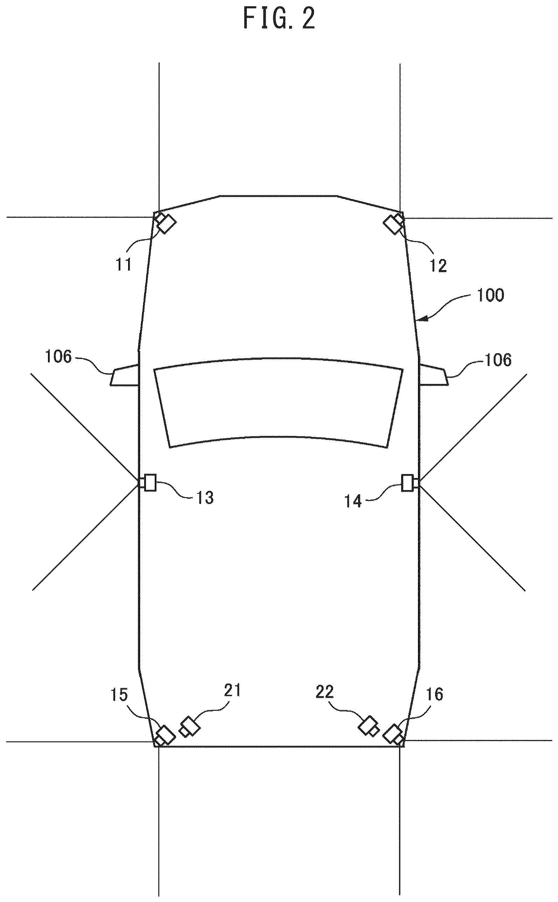

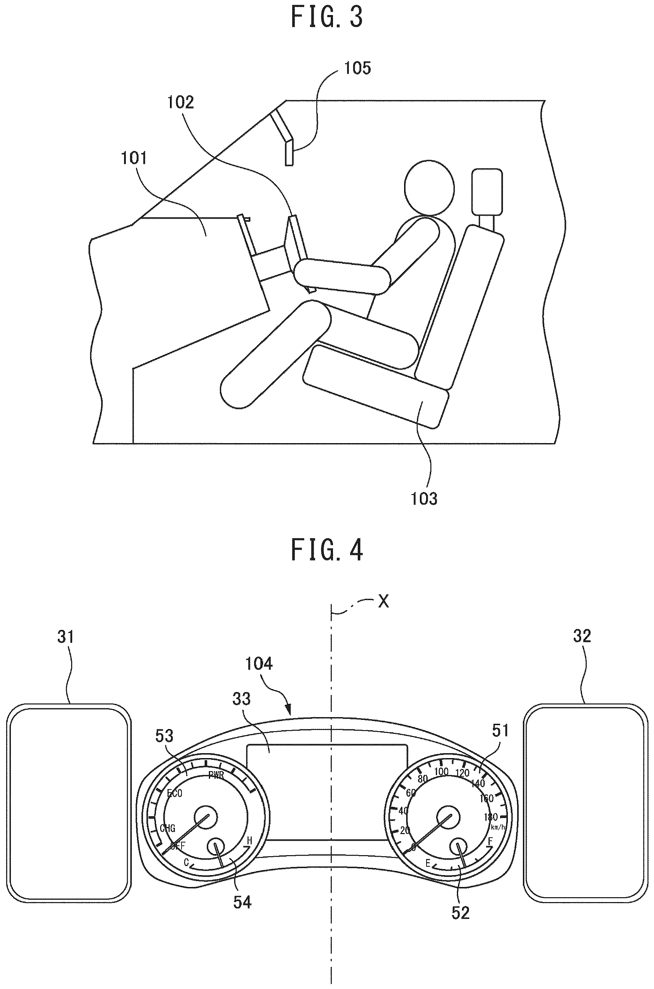

A configuration of a vehicle 100 in which a display device 1 according to one embodiment is mounted will be described with reference to FIGS. 1 to 4. The display device 1 is mounted in the vehicle 100, and displays an image generated by an imaging unit of the vehicle 100 on a display unit of the vehicle 100 in accordance with an input operation from a user. FIG. 1 is a schematic block diagram illustrating a configuration of the display device 1 of the vehicle 100. FIG. 2 is a schematic plan view illustrating the configuration of the vehicle 100 in which the display device 1 is mounted. FIG. 3 is a schematic cross-sectional view illustrating a part of the interior of the vehicle 100 in which the display device 1 is mounted. FIG. 4 is a schematic configuration diagram of a meter panel of the vehicle 100 and the surroundings thereof as viewed from the driver seat side.

As illustrated in FIG. 3, the vehicle 100 includes a dashboard 101 provided in a front portion of a vehicle compartment, a steering wheel 102 for steering the vehicle 100, a driver seat 103 on which a driver sits, and a meter panel 104 (see FIG. 4) provided in front of the driver seat 103 in the dashboard 101. The vehicle 100 includes a rearview mirror 105 for the driver to visually recognize areas to the rear and the rear sides of the vehicle 100. The rearview mirror 105 is attached to a ceiling of the vehicle 100 in the compartment of the vehicle 100. In addition, as illustrated in FIG. 2, the vehicle 100 includes side mirrors 106 for the driver to visually recognize areas to the right rear and the left rear of the vehicle 100. The side mirrors 106 are each attached to the outside of the vehicle 100 so as to protrude in a width direction from a side door or a front pillar of the vehicle 100.

As illustrated in FIG. 1, the display device 1 includes an imaging unit 10, a ranging unit 20, a display unit 30, an input unit 40, a vehicle sensor 50, a meter 60, and an electronic control unit (hereinafter referred to as "ECU") 70. The imaging unit 10, the ranging unit 20, the display unit 30, the input unit 40, the vehicle sensor 50, the meter 60, and the ECU 70 are communicably connected to each other via, for example, an in-vehicle network 5. The in-vehicle network 5 is a network conforming to a standard, for example, a controller area network (CAN) or the like.

The imaging unit 10 captures an image of the surrounding environment of the vehicle 100. In the present embodiment, the imaging unit 10 includes six cameras 11 to 16, specifically, a left front camera 11, a right front camera 12, a left center camera 13, a right center camera 14, a left rear camera 15, and a right rear camera 16. As illustrated in FIG. 2, the left front camera 11 is disposed at the left front of the vehicle 100 and captures an image of the surrounding environment to the left front of the vehicle 100. The right front camera 12 is disposed at the right front of the vehicle 100 and captures an image of the surrounding environment to the right front of the vehicle 100. The left center camera 13 is disposed at the left side of the vehicle 100 and captures an image of the surrounding environment to the left side of the vehicle 100. The right center camera 14 is disposed at the right side of the vehicle 100 and captures an image of the surrounding environment to the right side of the vehicle 100. The left rear camera 15 is disposed at the left rear of the vehicle 100 and captures an image of the surrounding environment to the left rear of the vehicle 100. The right rear camera 16 is disposed at the right rear of the vehicle 100 and captures an image of the surrounding environment to the right rear of the vehicle 100. Therefore, in the present embodiment, the imaging unit 10 includes cameras that respectively capture images of the surrounding environment to the left side and the right side of the vehicle 100. The imaging unit 10 includes, on the left side and the right side of the vehicle 100, a plurality of cameras that capture images of the surrounding environment in different orientations relative to a front-rear direction of the vehicle 100.

In the present embodiment, the imaging unit 10 includes three cameras on each of the left side and the right side of the vehicle 100. However, the imaging unit 10 may include any number of cameras other than three cameras as long as one or more cameras are provided on each of the left side and the right side of the vehicle 100. Therefore, the imaging unit 10 does not need to include the left center camera 13 and the right center camera 14, for example. In the present embodiment, the imaging unit 10 includes the same number of cameras on the left side and the right side of the vehicle 100, but may include different numbers of cameras on the left side and the right side of the vehicle 100. For example, the number of cameras on a side opposite to the driver seat side in the width direction of the vehicle 100 may be larger than the number of cameras on the driver seat side.

Each of the cameras 11 to 16 of the imaging unit 10 is a complementary metal-oxide-semiconductor (CMOS) camera or a charge-coupled device (CCD) camera having sensitivity to visible light. Each of the cameras 11 to 16 of the imaging unit 10 captures an image of the surrounding environment of the vehicle 100 in an imaging direction of each of the cameras 11 to 16, and generates an image in which the surrounding environment is seen. Each time the image data is generated, each of the cameras 11 to 16 of the imaging unit 10 outputs the generated image data to the ECU 70 via the in-vehicle network 5. Note that each of the cameras 11 to 16 may be a monocular camera or may be a stereo camera. In a case where the stereo camera is used as the cameras 11 to 16 of the imaging unit 10, the cameras 11 to 16 also function as the ranging unit 20.

The ranging unit 20 measures a distance to an object around the vehicle 100. In the present embodiment, the ranging unit 20 includes two ranging sensors 21 and 22, specifically, a left ranging sensor 21 and a right ranging sensor 22. As illustrated in FIG. 2, the left ranging sensor 21 is disposed at the left rear of the vehicle 100 and measures a distance to an object present to the left rear of the vehicle 100. The right ranging sensor 22 is disposed at the right rear of the vehicle 100 and measures a distance to an object present to the right rear of the vehicle 100.

In the present embodiment, the ranging unit 20 includes one ranging sensor on each of the left side and the right side of the vehicle 100. However, the ranging unit 20 may include any ranging sensor as long as the ranging sensor can detect an object present on the left side of the vehicle 100 and an object present on the right side of the vehicle 100. For example, the ranging unit 20 may include, at the left front, the right front, the left rear, and the right rear of the vehicle 100, ranging sensors that measure distances to objects respectively present in the left front, the right front, the left rear, and the right rear. Alternatively, the ranging unit 20 may include, on the roof of the vehicle 100, one ranging sensor that measures a distance to an object all around the vehicle 100 while rotating.

The ranging sensors 21 and 22 are, for example, LIDARs that output point cloud data, which is a set of distances to objects in azimuths around the vehicle 100. The ranging sensors 21 and 22 transmit data representing the measured results to the ECU 70 via the in-vehicle network 5 at each predetermined period. The ranging sensors 21 and 22 may each be, for example, a radar such as a millimeter-wave radar, or a sonar.

The display unit 30 displays an image. The display unit 30 is disposed on the left side and the right side in the vehicle width direction with respect to the center of the driver seat 103 of the vehicle 100. In the present embodiment, as illustrated in FIG. 4, the display unit 30 is disposed at least on each of both sides of the meter panel 104 of the vehicle 100. Therefore, the display unit 30 is disposed at a position that can be easily and visually recognized by the driver. A plane line X in FIG. 4 represents a plane extending in the front-rear direction of the vehicle through the center of the driver seat 103, and the display unit 30 includes a left display 31 disposed on the left side of the plane line X and a right display 32 disposed on the right side of the plane line X. The displays 31 and 32 are each, for example, a device such as a liquid crystal display or an organic EL display that displays an image on the screen.

In the present embodiment, the display unit 30 displays images of the surrounding environment of the vehicle 100 that are generated by a plurality of the imaging units 10. In particular, in the present embodiment, the left display 31 displays an image generated by the imaging unit 10 (that is, the left front camera 11, the left center camera 13, and the left rear camera 15) that captures an image of the surrounding environment to the left side of the vehicle 100. In the present embodiment, the right display 32 displays an image generated by the imaging unit 10 (that is, the right front camera 12, the right center camera 14, and the right rear camera 16) that captures an image of the surrounding environment to the right side of the vehicle 100. Accordingly, the image on the left side of the vehicle 100 is displayed on the left display 31, and the image on the right side of the vehicle 100 is displayed on the right display 32, and thus the driver can easily recognize the directions in which the images displayed on the displays 31 and 32 are captured.

In the present embodiment, the displays 31 and 32 are disposed right beside the meter panel 104. Therefore, the displays 31 and 32 are arranged at positions within arm's reach of the driver while driving.

In addition, in the present embodiment, as described above, the vehicle 100 includes the rearview mirror 105 and the side mirrors 106. Therefore, the vehicle 100 includes, in addition to the rearview mirror 105 and the side mirrors 106, the displays 31 and 32 that display images generated by the imaging units 10 that capture images of the surrounding environment of the vehicle 100. Accordingly, an area to the rear or diagonally rear to the vehicle 100 can be visually recognized with the rearview mirror 105 or the side mirror 106, and an image of a region that is difficult to visually recognize with the rearview mirror 105 or the side mirror 106 can be displayed on the display 31 or 32.

In addition, in the present embodiment, the display unit 30 is also disposed within the meter panel 104 of the vehicle 100. Therefore, the display unit 30 is also disposed in front of the center of the driver seat 103 of the vehicle 100. In the present embodiment, the display unit 30 includes a central display 33 located so as to intersect with the plane line X.

In the present embodiment, the central display 33 displays information on the vehicle 100 and driving of the vehicle 100. Specifically, the central display 33 displays, for example, a travel distance of the vehicle 100, the gas mileage of the vehicle 100, an outside air temperature, a speed limit, various warnings, and the like. The central display 33 is also, for example, a device such as a liquid crystal display or an organic EL display that displays an image on the screen.

Each of the displays 31, 32, and 33 of the display unit 30 is connected to the ECU 70 via the in-vehicle network 5. The displays 31, 32, and 33 receive a display signal from the ECU 70 and display an image corresponding to the received display signal.

The input unit 40 detects an input operation by an occupant (user) of the vehicle 100. In particular, the input unit 40 receives, as an input, a physical operation or a voice operation by the occupant. The input unit 40 includes, for example, at least one of a touch panel, a switch, a button, a microphone, and the like. The input unit 40 transmits, via the in-vehicle network 5 to the ECU 70, data on the input operation received from the occupant.

In particular, in the present embodiment, the input unit 40 includes a blinker switch 41 and a touch sensor 42. The blinker switch 41 is attached beside the steering wheel 102, and receives, as an input, a direction indication operation for indicating a direction in which a blinker lamp of the vehicle 100 should be caused to blink. Therefore, the input operation in the input unit 40 includes a direction indication operation in the blinker switch 41.

The touch sensor 42 is a sensor that detects a touch by the occupant (particularly, a finger of the occupant). The touch sensor 42 is disposed on the screens of the left display 31 and the right display 32. Therefore, when the screen of the left display 31 or the right display 32 is touched by the finger of the occupant, the touch sensor 42 detects the touch position on the screen of the left display 31 or the right display 32. Therefore, the touch sensor 42 receives, as an input, a touch operation by the occupant on the screen of the display 31 or 32. Therefore, the input operation in the input unit 40 includes a contact operation detected by the touch sensor 42.

As described above, the left display 31 and the right display 32 are disposed at positions within reach of the driver while driving. Therefore, the driver can easily touch the touch sensor 42 through the screens of the displays 31 and 32 while driving, and can perform a contact operation.

The vehicle sensor 50 is a sensor that detects a state of the vehicle 100. In the present embodiment, the vehicle sensor 50 specifically detects the speed and acceleration of the vehicle 100, the fuel level or the amount of charge remaining in the vehicle 100, the temperature of cooling water of the vehicle 100, and the like. The vehicle sensor 50 outputs data representing the detection results of the state of the vehicle 100 to the ECU 70 via the in-vehicle network 5 at each predetermined period.

The meter 60 is a device for notifying the occupant of the state of the vehicle 100. The meter 60 is provided within the meter panel 104. The meter 60 receives an operation signal from the ECU 70 and operates according to the received operation signal.

In the present embodiment, the meter 60 includes a speedometer 51 that indicates the speed of the vehicle 100, a fuel gauge 52 that indicates the remaining amount of fuel, a hybrid system indicator 53 that indicates the output and regeneration level of a hybrid system, and a water temperature gauge 54 that indicates the cooling water temperature of an internal combustion engine. However, the meter 60 may include a gauge that indicates other parameters. In the present embodiment, the meter 60 is an analog meter, but may be a digital meter. In the present embodiment, the central display 33 is disposed between the speedometer 51 and the fuel gauge 52, and the hybrid system indicator 53 and the water temperature gauge 54. However, all of the meters of the meter 60 may be displayed as images on the central display 33.

### Configuration and Operation of ECU

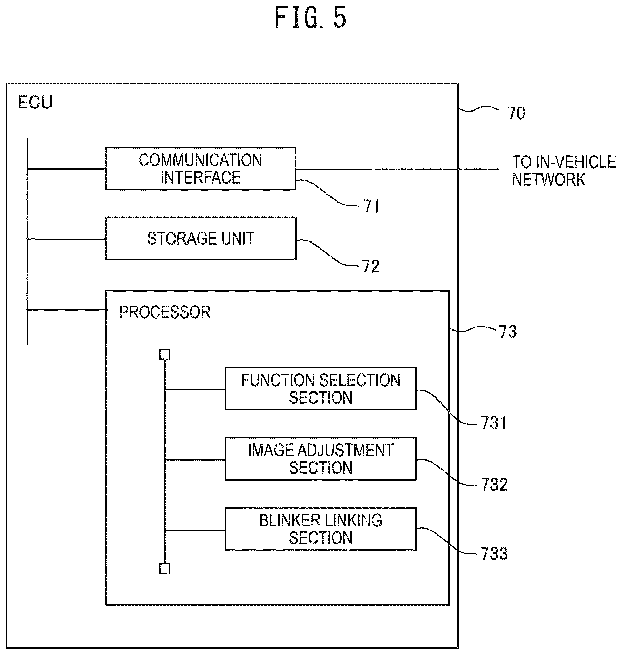

The ECU 70 functions as a control unit that controls an image to be displayed on the display unit 30. The ECU 70 also controls the operation of the meter 60. FIG. 5 is a configuration diagram schematically illustrating a configuration of the ECU 70. In the example illustrated in FIG. 5, the display device 1 includes one ECU 70, but may include a plurality of the ECUs 70 divided depending on functions. The ECU 70 includes a communication interface 71, a storage unit 72, and a processor 73. The communication interface 71, the storage unit 72, and the processor 73 may be separate circuits, or may be configured as one integrated circuit.

The communication interface 71 is a circuit for connecting the ECU 70 to the in-vehicle network 5. The communication interface 71 transmits signals received from the imaging unit 10, the ranging unit 20, the input unit 40, and the vehicle sensor 50 to the processor 73. In addition, the communication interface 71 transmits signals output from the processor 73 to the display unit 30 and the meter 60.

The storage unit 72 stores data. The storage unit 72 includes at least one of a volatile semiconductor memory, a nonvolatile semiconductor memory, a hard disk drive (HDD), and a solid state drive (SSD), for example. The storage unit 72 stores a program to be executed by the processor 73. In addition, the storage unit 72 stores image data received from the imaging unit 10, data representing the distance measurement results received from the ranging unit 20, and data representing the detection results received from the vehicle sensor 50.

The processor 73 includes one or a plurality of central processing units (CPUs) and peripheral circuits thereof. The processor 73 may further include another arithmetic circuit such as a logical arithmetic unit or a numerical arithmetic unit. The processor 73 executes the computer program stored in the storage unit 72.

As illustrated in FIG. 5, the processor 73 includes a function selection section 731, an image adjustment section 732, and a blinker linking section 733. Each of the sections included in the processor 73 is, for example, a functional module to be executed by the computer program operating on the processor 73.

The function selection section 731 causes the occupant to select functions related to images to be displayed on the left display 31 and the right display 32. In the present embodiment, the left display 31 and the right display 32 can display images related to various functions, and the occupant can select an image related to which function of the images related to the various functions is to be displayed. The functions include, for example, an image display function of displaying an image generated by the imaging unit 10, a driving assistance control function of displaying a screen for controlling driving assistance for the vehicle 100, and an air conditioning control function of displaying a screen for controlling air conditioning of the vehicle 100.

When the image display function is selected, an image of the surrounding environment of the vehicle 100 received from the imaging unit 10 is displayed on the left display 31 or the right display 32. At this time, as described above, an image generated by any one of the plurality of imaging units 10 that capture images of the surrounding environment on the left side of the vehicle 100 is displayed on the left display 31. Also, an image generated by any one of the plurality of imaging units 10 that capture images of the surrounding environment on the right side of the vehicle 100 is displayed on the right display 32. Of the images received from the plurality of imaging units 10, the image displayed on each of the displays 31 and 32 and the angle of view of the displayed image are changed based on an input operation from the occupant, which is detected by the input unit 40.

As described above, in the present embodiment, of the images received from the plurality of imaging units 10, the image displayed on each of the displays 31 and 32 and the angle of view of the displayed image are changed based on the input operation from the occupant. Thus, an image according to the preference of the occupant can be displayed at an angle of view according to the occupant preference of the occupant on each of the displays 31 and 32. In particular, in the present embodiment, the left display 31 and the right display 32 are provided separately from the rearview mirror 105 and the side mirrors 106. Therefore, in addition to the region that can be visually recognized by the rearview mirror 105 and the side mirror 106, the occupant can recognize a state of yet another surrounding environment of the vehicle 100 in accordance with the preference of the user.

When the driving assistance control function is selected, the screen for controlling driving assistance is displayed on the left display 31 or the right display 32. For example, when the vehicle 100 has an adaptive cruise control (ACC) function as driving assistance, a screen for setting a target inter-vehicle distance to a preceding vehicle and an upper limit speed of the vehicle 100 is displayed. When the occupant touches and operates the screen of the left display 31 or the right display 32 while such a screen is displayed, the operation is detected by the touch sensor 42, and the target inter-vehicle distance or the upper limit speed can be set.

When the air conditioning control function is selected, a screen for controlling an air conditioner of the vehicle 100 is displayed on the left display 31 or the right display 32. For example, when the air conditioning control function is selected, a screen for setting a target temperature in the vehicle 100, the intensity of air blowing from the air conditioner, or the like is displayed. When the occupant touches and operates the screen of the left display 31 or the right display 32 while such a screen is displayed, the operation is detected by the touch sensor 42, and the target temperature or the intensity of air blowing can be set.

When the image display function is selected by the function selection section 731, the image adjustment section 732 adjusts an image to be displayed on the left display 31 or the right display 32 in accordance with an input operation by the occupant. In the present embodiment, of the images received from the plurality of imaging units 10, the image adjustment section 732 changes the image to be displayed on each of the displays 31 and 32 and the angle of view of the displayed image, in accordance with a touch operation of the occupant, which is detected by the touch sensor 42.

In particular, in the present embodiment, of the images generated by the plurality of imaging units 10 that capture images of the surrounding environment on the left side of the vehicle 100, the image adjustment section 732 changes an image to be displayed on the left display 31 and an angle of view of the image in accordance with a touch operation of the occupant, which is detected by the touch sensor 42 disposed on the screen of the left display 31. Similarly, of the images generated by the plurality of imaging units 10 that capture images of the surrounding environment on the right side of the vehicle 100, an image to be displayed on the right display 32 and an angle of view of the image are changed in accordance with a touch operation of the occupant, which is detected by the touch sensor 42 disposed on the screen of the right display 32. Therefore, the image adjustment section 732 switches, based on an input operation by the occupant, the image to be displayed on the left display 31 among the images received from the plurality of cameras (that is, the left front camera 11, the left center camera 13, and the left rear camera 15) disposed on the side (left side) on which the left display 31 is provided. Similarly, the image adjustment section 732 switches, based on an input operation by the occupant, the image to be displayed on the right display 32 among the images received from the plurality of cameras (that is, the right front camera 12, the right center camera 14, and the right rear camera 16) disposed on the side (right side) on which the right display 32 is provided. Thus, images of the surrounding environment captured in a plurality of different orientations relative to the front-rear direction can be displayed on the left display 31 and the right display 32 in accordance with input operations of the occupant respectively on the left side and the right side of the vehicle 100, and the convenience of the occupant can be improved.

In addition, in the present embodiment, in addition to the image generated by the imaging unit 10, the image adjustment section 732 displays an image generated according to an output of the ranging unit 20 on the left display 31 or the right display 32 in accordance with an input operation of the occupant. In the present embodiment, the image adjustment section 732 causes the left display 31 to display a three-dimensional image of an area to the left rear of the vehicle 100, which is generated based on a distance to an object present to the left rear of the vehicle 100 and detected by the left ranging sensor 21. Similarly, the image adjustment section 732 causes the right display 32 to display a three-dimensional image of an area to the right rear of the vehicle 100, which is generated based on a distance to an object present to the right rear of the vehicle 100 and detected by the right ranging sensor 22. As just described, the image based on the distance to the object detected by the ranging unit 20 is displayed, and thus the occupant can grasp a positional relationship between the vehicle 100 and the object around the vehicle, which cannot be recognized from a planar image by the imaging unit 10.

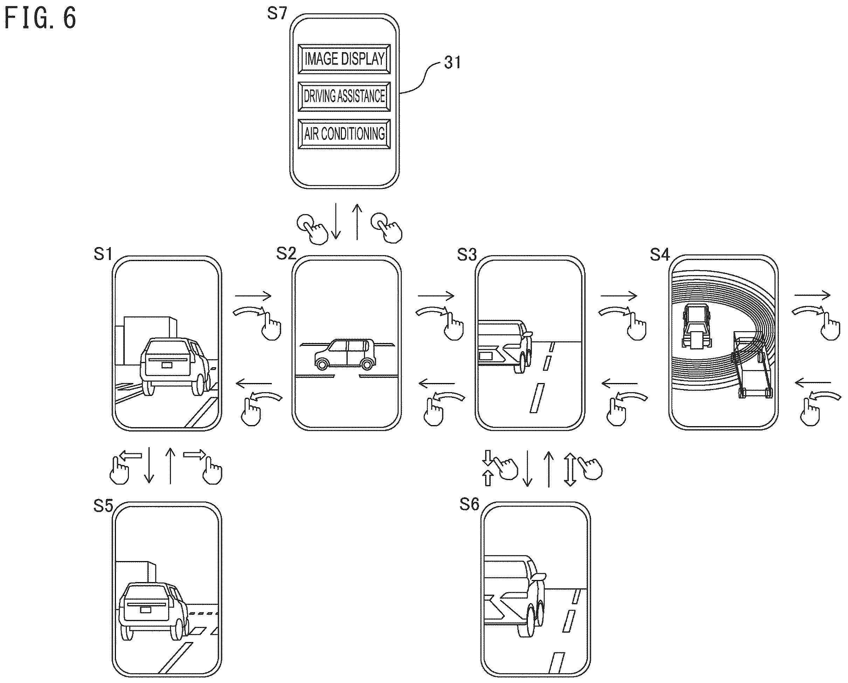

FIG. 6 is a diagram schematically illustrating a relationship between a touch operation detected by the touch sensor 42 and an image displayed on the left display 31. FIG. 6 illustrates a state where seven different images S1 to S7 are displayed on the left display 31. In addition, between the different images S1 to S7 displayed on the left displays 31, touch operations for changing the display of the images are indicated.

In the present embodiment, when a swiping operation on the screen of the left display 31 or the right display 32 is detected by the touch sensor 42, the image adjustment section 732 changes the image to be displayed on the left display 31 or the right display 32 to an image received from another imaging unit 10. In the example illustrated in FIG. 6, the image S1 is an image captured and generated by the left front camera 11. When a swiping operation to the right is detected in a state where the image S1 is displayed on the left display 31, the image S2 is displayed on the left display 31. The image S2 is an image captured and generated by the left center camera 13. When a swiping operation to the right is detected in a state where the image S2 is displayed on the left display 31, the image S3 is displayed on the left display 31. The image S3 is an image captured and generated by the left rear camera 15. When a swiping operation to the right direction is detected in a state where the image S3 is displayed on the left display 31, the image S4 is displayed on the left display 31. The image S4 is an image generated according to an output of the left ranging sensor 21. When a swiping operation to the right is detected in a state where the image S4 is displayed on the left display 31, the image S1 is displayed on the left display 31. When a swiping operation to the left is detected, the images are switched in the order opposite to that when a swiping operation to the right is detected. Thus, the occupant can switch the images to be displayed on each of the displays 31 and 32 by an intuitive operation.

In addition, in the present embodiment, when a slide operation, a pinch-in operation, or a pinch-out operation on the screen of the left display 31 or the right display 32 is detected by the touch sensor 42, the image adjustment section 732 changes the angle of view of the image to be displayed on the left display 31 or the right display 32. In the example illustrated in FIG. 6, the image S1 is an image of the right-side portion of the image captured and generated by the left front camera 11. When a slide operation to the left is performed in a state where the image S1 is displayed on the left display 31, the image S5 is displayed on the left display 31. The image S5 is an image having an angle of view obtained by shifting the image S1 to the left side by the amount corresponding to the slide operation. When a slide operation to the right by the amount corresponding to the above slide operation to the left is performed in a state where the image S5 is displayed on the left display 31, the image S1 is displayed on the left display 31. In addition, in the example illustrated in FIG. 6, the image S3 is an image that represents the entire image captured and generated by the left rear camera 15. When a pinch-in operation is performed in a state where the image S3 is displayed on the left display 31, the image S6 is displayed on the left display 31. The image S6 is an image having an angle of view obtained by enlarging the image S3 by the amount corresponding to the pinch-in operation. When a pinch-out operation by the amount corresponding to the above pinch-in operation is performed in a state where the image S6 is displayed on the left display 31, the image S3 is displayed on the left display 31. Thus, the occupant can change the angle of view of the image to be displayed on each of the displays 31 and 32 by an intuitive operation.

In the present embodiment, when a tap operation on the screen of the left display 31 or the right display 32 is detected by the touch sensor 42 while the image received from the imaging unit 10 is displayed on the left display 31 or the right display 32, the image adjustment section 732 causes the left display 31 or the right display 32 to display an image S7 on which the occupant selects a function. In addition, in the example illustrated in FIG. 6, buttons corresponding to the respective functions are displayed in the image S7. When a tap operation is detected in the image S7 on the button corresponding to the image display function, the function selection section 731 displays, on the left display 31, any one of the images S1 to S6 received from the imaging unit 10.

The touch operation illustrated in FIG. 6 is an example. Therefore, for example, the image to be displayed on the left display 31 or the right display 32 may be changed to an image received from another imaging unit 10 by a slide operation. The image and the angle of view in the image adjustment section 732 may be changed by an input different from the touch operation detected by the touch sensor 42. For example, the image and the angle of view in the image adjustment section 732 may be changed based on a voice of the occupant, which is detected by a microphone.

The blinker linking section 733 controls, based on an input by the blinker switch 41, an image to be displayed on the left display 31 or the right display 32. In the present embodiment, the blinker linking section 733 causes the display 31 or 32 disposed in the direction indicated by the blinker switch 41 to display an image received from the imaging unit 10 that captures an image in the direction indicated by the blinker switch 41. In particular, in the present embodiment, the blinker linking section 733 displays an image received from the imaging unit 10 that captures an image regardless of the function selected in the function selection section 731. Therefore, for example, the blinker switch 41 is operated even while the screen for controlling driving assistance is displayed, and in such a case, the blinker linking section 733 displays the image received from the imaging unit 10 that captures an image in the direction indicated by the blinker switch 41. As a result, when the vehicle 100 turns right or left or changes lanes, the occupant can check the situation in the direction without turning his/her face to the side mirror 106.

Specifically, in the present embodiment, when an input that indicates a left turn is detected by the blinker switch 41, the blinker linking section 733 causes the left display 31 to display an image captured and generated by the left rear camera 15. Also, when an input that indicates a right turn is detected by the blinker switch 41, the blinker linking section 733 causes the right display 32 to display an image captured and generated by the right rear camera 16. The blinker linking section 733 may display an image captured and generated by another camera, such as images captured and generated by the left center camera 13 and the right center camera 14, instead of images captured and generated by the left rear camera 15 and the right rear camera 16.

As described above, in the present embodiment, the images to be displayed on the left display 31 and the right display 32 are switched based on an input operation from the occupant. In particular, in the present embodiment, images are displayed on the left display 31 and the right display 32 independently and separately while not being linked to each other, based on input operations detected by the touch sensors 42 respectively disposed on the displays 31 and 32. Therefore, the left display 31 may display, based on an input operation of the occupant, a screen for controlling an air conditioning function, and the right display 32 may display an image generated by the imaging unit 10. Thus, various operations can be performed by the left display 31 and the right display 32, and information necessary for the occupant can be acquired.

Note that images may be displayed on the left display 31 and the right display 32 at least partially in conjunction with each other. For example, when an image captured by the left rear camera 15 is displayed on the left display 31, an image captured by the right rear camera 16 may be displayed on the right display 32.

### Flow of Processing

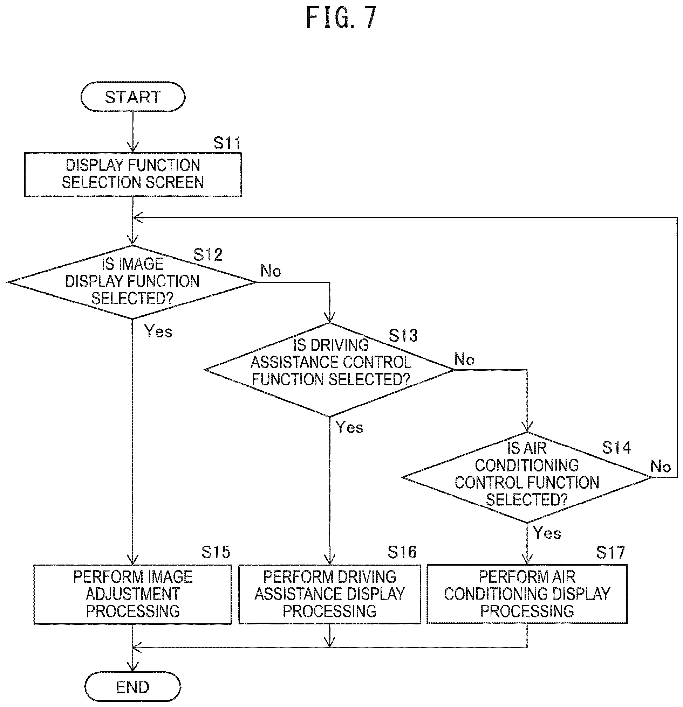

Next, the flow of processing performed by the processor 73 of the ECU 70 will be described with reference to FIGS. 7 to 9. FIG. 7 is a flowchart illustrating a flow of function selection processing performed by the function selection section 731.

As illustrated in FIG. 7, when the function selection processing is started, the function selection section 731 first causes each of the displays 31 and 32 to display a function selection screen such as the image S7 illustrated in FIG. 6 (step S11). Then, the function selection section 731 determines whether the touch sensor 42 has detected a tap operation for selecting the image display function (step S12), whether the touch sensor 42 has detected a tap operation for selecting the driving assistance control function (step S13), and whether the touch sensor 42 has detected a tap operation for selecting the air conditioning control function (step S14).

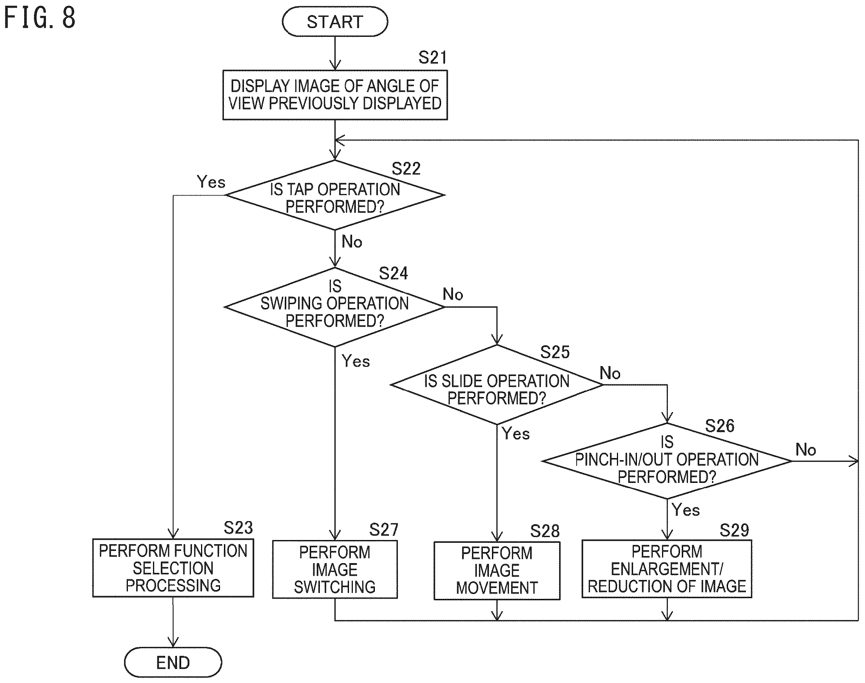

When it is determined that none of the tap operation for selecting the image display function, the tap operation for selecting the driving assistance control function, and the tap operation for selecting the air conditioning control function is detected in steps S12, S13, and S14, steps S12 to S14 are repeated. On the other hand, when it is determined that the tap operation for selecting the image display function is detected in step S12, the function selection section 731 performs image adjustment processing described with reference to FIG. 8 (step S15). When it is determined that the tap operation for selecting the driving assistance control function is detected in step S13, the function selection section 731 performs driving assistance control processing (step S16), and as a result, the screen for controlling driving assistance is displayed on the corresponding display 31 or 32. When it is determined that the tap operation for selecting the air conditioning control function is detected in step S14, the function selection section 731 performs the air conditioning control processing (step S17), and as a result, the screen for controlling the air conditioner of the vehicle 100 is displayed on the corresponding display 31 or 32.

FIG. 8 is a flowchart illustrating a flow of image adjustment processing performed by the image adjustment section 732.

As illustrated in FIG. 8, when the image adjustment processing is started, the image adjustment section 732 first causes the corresponding display 31 or 32 to display the last image of the angle of view displayed when the image adjustment processing performed is previously performed (step S21). Therefore, for example, if a part of the last image captured and generated by the left rear camera 15 when the image adjustment processing has been previously performed has been enlarged and displayed, the image adjustment section 732 enlarges the same part of the image captured and generated by the left rear camera 15 and displays the enlarged same part.

Next, the image adjustment section 732 determines whether a tap operation is detected by the touch sensor 42 on the screen of the corresponding display 31 or 32 (step S22). When it is determined that the tap operation is detected in step S22, the image adjustment section 732 performs the function selection processing illustrated in FIG. 7 (step S23).

When it is determined that the tap operation is not detected in the step S22, the image adjustment section 732 determines whether a swiping operation is detected (step S24), whether a slide operation is detected (step S25), and whether a pinch-in/pinch-out operation is detected (step S26) by the touch sensor 42 on the screen of the corresponding display 31 or 32.

When it is determined that none of the swiping operation, the slide operation, and the pinch-in/pinch-out operation is detected in the steps S24, S25, and S26, the steps S22 to S26 are repeated. On the other hand, when it is determined that the swiping operation is detected in step S24, the image adjustment section 732 switches the image to be displayed on the corresponding display 31 or 32 to an image captured and generated by another camera in accordance with the direction of the swiping operation (step S27), and then steps S22 to S26 are repeated. Further, when it is determined that the slide operation is detected in step S25, the image displayed on the corresponding display 31 or 32 is moved in accordance with the direction of the slide operation (step S28), and then steps S22 to S26 are repeated. Furthermore, when it is determined that the pinch-in/pinch-out operation is detected in step S26, the image displayed on the corresponding display 31 or 32 is enlarged or reduced in accordance with the pinch-in/pinch-out operation (step S29), and then steps S22 to S26 are repeated.

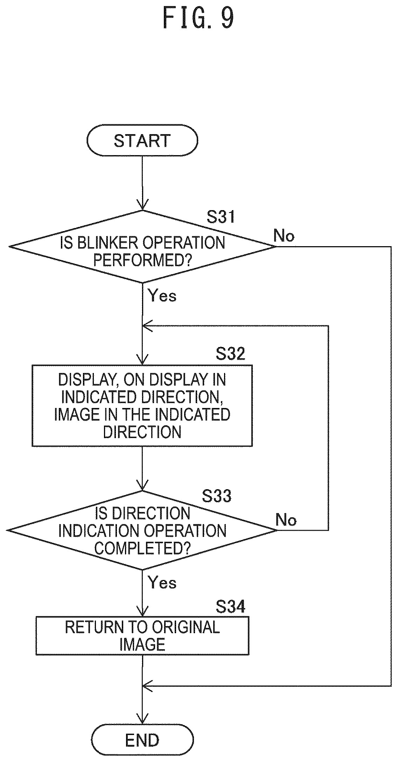

FIG. 9 is a flowchart illustrating a flow of blinker linking processing performed by the blinker linking section 733. The blinker linking processing is repeatedly performed at every certain time interval excepting a period during the execution of the processing.

As illustrated in FIG. 9, when the blinker linking processing is started, the blinker linking section 733 first determines whether the blinker switch 41 is operated by the occupant (step S31). When it is determined that the blinker switch 41 is not operated in step S31, the blinker linking processing is ended.

On the other hand, when it is determined that the blinker switch 41 is operated in step S31, the blinker linking section 733 causes the display 31 or 32 disposed in the direction indicated by the blinker switch 41 to display the image received from the imaging unit 10 that captures an image in the direction (step S32). Next, the blinker linking section 733 determines whether a direction indication operation is completed, that is, whether the blinker switch 41 is returned to the original state in which the blinker switch 41 does not indicate a direction (step S33). When it is determined in step S33 that the direction indication operation is not completed, step S32 is repeated. On the other hand, when it is determined in step S33 that the direction indication operation is completed, the image displayed on the corresponding display 31 or 32 is returned to the original image (step S34) before the image is displayed in step S32.

Although the preferred embodiments according to the present disclosure have been described above, the present disclosure is not limited to these embodiments, and various modifications and changes can be made within the scope of the claims.

## Claims

1. A display device (1) mounted in a vehicle (100), the display device (1) comprising:
a display unit (30) disposed on each of a left side and a right side with respect to a center of a driver seat of the vehicle (100);
an input unit (40) configured to detect an input operation by an occupant of the vehicle (100); and
a control unit (70) configured to control an image to be displayed on the display unit (30),
wherein the control unit (70) causes the display unit (30) to display images of a surrounding environment of the vehicle (100) that are received from a plurality of imaging units (10) provided with the vehicle (100), and changes at least one of an image to be displayed on the display unit (30) of the images received from the plurality of imaging units (10) and an angle of view of the image to be displayed, based on an input operation originating from a user and detected by the input unit (40).

2. The display device (1) according to claim 1, wherein the display unit (30) is disposed at a position within arm's reach of a driver of the vehicle (100) while driving, and
the input unit (40) includes a touch sensor (42) disposed on a screen of the display unit (30).

3. The display device (1) according to claim 2, wherein when a swiping operation on the screen of the display unit (30) is detected by the touch sensor (42), the control unit (70) changes the image to be displayed on the display unit (30) to an image received from another imaging unit (10).

4. The display device (1) according to claim 2 or 3, wherein when a slide operation, a pinch-in operation, or a pinch-out operation on the screen of the display unit (30) is detected by the touch sensor (42), the control unit (70) changes the angle of view of the image to be displayed on the display unit (30).

5. The display device (1) according to any one of claims 1 to 4, wherein the input unit (40) includes a blinker switch (41), and
the input operation includes a direction indication operation in the blinker switch (41).

6. The display device (1) according to claim 5, wherein the control unit (70) causes the display unit (30) disposed in a direction indicated by the blinker switch (41) to display the image received from the imaging unit (10) that captures an image in the direction indicated by the blinker switch (41).

7. The display device (1) according to any one of claims 1 to 6, wherein the display unit (30) is disposed on each of both sides of a meter panel of the vehicle (100).

8. The display device (1) according to any one of claims 1 to 7, wherein the imaging unit (10) includes cameras (11-16) that capture images of the surrounding environment on a left side and a right side of the vehicle (100),
the control unit (70) causes the display unit (30) disposed on the left side with respect to the center of the driver seat to display an image received from the imaging unit (10) that captures an image of the surrounding environment on the left side of the vehicle (100), and causes the display unit (30) disposed on the right side with respect to the center of the driver seat to display an image received from the imaging unit (10) that captures an image of the surrounding environment on the right side of the vehicle (100).

9. The display device (1) according to claim 8, wherein the imaging unit (10) includes a plurality of cameras (11-16) provided on the left side and the right side of the vehicle (100) and configured to capture images of the surrounding environment in different orientations within a front-rear direction of the vehicle (100), and
the control unit (70) switches, based on the input operation, the image to be displayed on the display unit (30) among images received from a plurality of cameras (11-16) arranged on a side on which the display unit (30) is provided.

10. The display device (1) according to any one of claims 1 to 9, wherein the display units (30) disposed on the left side and the right side with respect to the center of the driver seat of the vehicle (100) display images separately based on the input operation without linking with each other.

11. The display device (1) according to any one of claims 1 to 10, wherein the control unit (70) causes the display unit (30) to display, based on the input operation, an image generated according to an output of a ranging unit that is provided with the vehicle (100) and configured to detect a distance to an object around the vehicle (100).

12. A vehicle (100) comprising the display device (1) according to any one of claims 1 to 11, the vehicle (100) comprising
a side mirror provided separately from the display unit (30).
